# EUROPEAN PATENT SPECIFICATION

(11) **EP 1 841 124 B1**
(45) Date of publication and mention of the grant of the patent: **08.09.2010**
(21) Application number: 06006446.6
(22) Date of filing: 28.03.2006
(51) Int. Cl.: H04L 9/32, G06F 1/14

(54) **Flexible generation of trusted time sources**
Flexible Erzeugung vertrauenswürdiger Zeitquellen
Génération flexible de sources de temps crédibles

(43) Date of publication of application: 03.10.2007
(73) Proprietor: Nokia Siemens Networks GmbH & Co. KG, 81541 München (DE); Fraunhofer-Gesellschaft zur Förderung der angewandten Forschung e.V., 80686 München (DE)
(72) Inventor: Abendroth, Jörg, 81737 München (DE); Cuellar, Jorge, Dr., 82065 Baierbrunn (DE); Kuntze, Nicolai, 64293 Darmstadt (DE); Marhöfer, Michael, Dr., 82041 Deisenhofen (DE); Rajasekaran, Hariharan, 81675 München (DE); Schmidt, Andreas, Dr., 65929 Frankfurt am Main (DE); Schäfer, Manfred, 85661 Forstinning (DE)

(56) References cited:
- EP-A- 1 022 640
- WO-A-00/79348
- WO-A-01/63927
- DE-A1- 10 301 100

## Description

The present invention relates to a method for associating a TCV (tick clock value) value generated by a clock module with a UTC (universal time clock) value, a method for providing a UTC time association certificate, a TCV clock module, and a verification module for associating TCV values with UTC values.

Security and authentication issues are of ever growing importance in automated environments.

A major concern with many automated transactions or digitalized data is the assignment or association of a reliable time value to the transaction or to the transmission of data. Such a time value can provide evidence for claims about time-related attributes.

For instance, a time value can show that an e-commerce transaction was performed within an agreed time limit. Another example is the proof that a document was created before a certified time or date. In particular where the date of origin has a legal importance (e.g. first to invent principle in the U.S. patent system) such a proof can help assert one's rights. Yet another field of application is accounting and charging, where time values are used to rule out manipulation.

Usually, time values are assigned in the form of timestamps. A timestamp can refer to a time code or a digital signature whose signer vouches for the existence of the signed document or content at the time given by the time code or as part of the digital signature.

The provision of timestamps constitutes a service that can be conceived as an internal or an external service. For instance, commercial suppliers of timestamps exist, such as DigiStamp (www.e-timestamp.com/docs/SecureTimeAPI.pdf). A block or blob (binary large object) of data can be sent to such a service so as to obtain a timestamp by a certified service.

Mostly, timestamps provide a UTC (Universal Time Coordinated or Universal Time Clock) value, i.e. a coordinated universal time. This coordinated universal time UTC is an atomic realization of Universal Time (UT) or Greenwich Mean Time (GMT), the astronomical basis for civil time. Below, a trusted entity that provides time values such as UTC values is referred to as trusted authority or TA.

To maintain an accurate UTC time, a coordination or synchronisation of time is required. For this purpose protocols such as NTP (Network Time Protocol) or radio signals such as the German DCF77 may be used.

There are scenarios where the immediate assignment of UTC values is not economical or not feasible. An example is provided by the remote metering of the consumption of power (or some other commodity). The provider needs to know the consumed amount for charging the subscriber accordingly. When power is consumed by a large number of locally distributed subscribers it is an expensive solution to provide each of them with a meter comprising a UTC clock (or a verifiable reference to UTC) Generally, it is more economical to assign a UTC time value at a central charging system that collects the charging information from the subscribers' metering devices. Frequently, the time period has to be specified when the consumption of the commodity has taken place (e.g. when the price depends on the time of the day or the day as with special rates for telephone calls during the night or on week-ends). Hence, there is a need for a more accurate determination of the time than given by a time value corresponding to the moment when data are collected from metering devices.

An economical decentralised or distributed measurement of time can be performed based on mechanisms proposed by the TCG (Trusted Computing Group). In this context, a clock can be provided by inherent mechanisms of computing devices such as the clock or frequency the respective device uses for its internal operations (e.g. for bus access).

Evidently, such a clock mechanism does not provide UTC values but an only locally defined time measure, which below is referred to as TCV (Tick Clock Value). In the following the expressions TCV value, TCV time, and TCV clock will be used for locally defined time measuring as opposed to the expressions UTV value, UTC time and UTC clock which are used in conjunction with entities adhering to the UTC standard. Consequently, a TCV clock is a clock that provides a time measured by locally generated ticks, TCV time is taken by counting these ticks and TCV value refers to a tick count number.

To qualify as a suitable clock such a TCV clock mechanism is usually required to meet the below criteria:
1. A reliable tick counter that is protected against (physical and logical) manipulations needs to be provided.
2. An association between TCV time and UTC time is required so that TCV values can be converted into UTC values.
3. Reliable information about clock accuracy (e.g. continuous deviation, drift of clock frequency) is required.
4. Reliable information about time setting accuracy is a further requirement (delays between an update or reset request sent by a time authority TA and the corresponding adjustment/reset of TCV cycles degrade the accuracy and hence should be monitored).

WO 00/79348 A2 discloses a system and method of providing a trusted local clock in a computer environment. The local clock is in communication with a certified master clock. The accuracy of the time of the local clock is certified by the master clock. If the local clock departs from a predetermined acceptable error, the master clock updates the local clock. The communication between the master clock and the local clock is a secure, synchronized communication. When the local clock is accurate, the master clock provides certification tokens which the local clock can provide to verify accuracy of its time stamps.

The Trusted Computing Group (TCG) has specified mechanisms, criteria, and implementation solutions for a TCV clock setting. TCG refers to such a mechanism as trusted platform module (TPM). Trusted Platform Module (TPM) Specification 1.2 details a method for centrally associating TCV and UTC values. To this purpose, a synchronisation and association of TCV time with UTC time is performed (here the term synchronisation refers to a setting of the TCV clock (e.g. reset), the term association refers to the establishment of a relationship between TCV time measure and UTC time measure). The TCG specification assumes the synchronisation/association to be performed by a external TA that is directly connected to a TPM. Below we use the term clock module rather than TPM for the module generating a TCV time to indicate by this notification that the invention is not restricted to modules as defined by TCG. The entity associating TCV time and UTC time is called verification module (as opposed to TA in the TCG specification). This term is chosen to suggest that the TA function, i.e. provision of UTC time, is not necessarily performed by the entity associating TCV and UTC values. For instance, a verification module may rely on an external TA to supply UTC values which are associated with TCV values. Preferably, the verification module also comprises a UTC clock so as to rule out inaccuracies due to the greater delay caused by the communication with an external TA.

The term module is used to be in line with TCG specifications. The term device could be substituted for module in virtually all places under the assumption of a broad interpretation of this term.

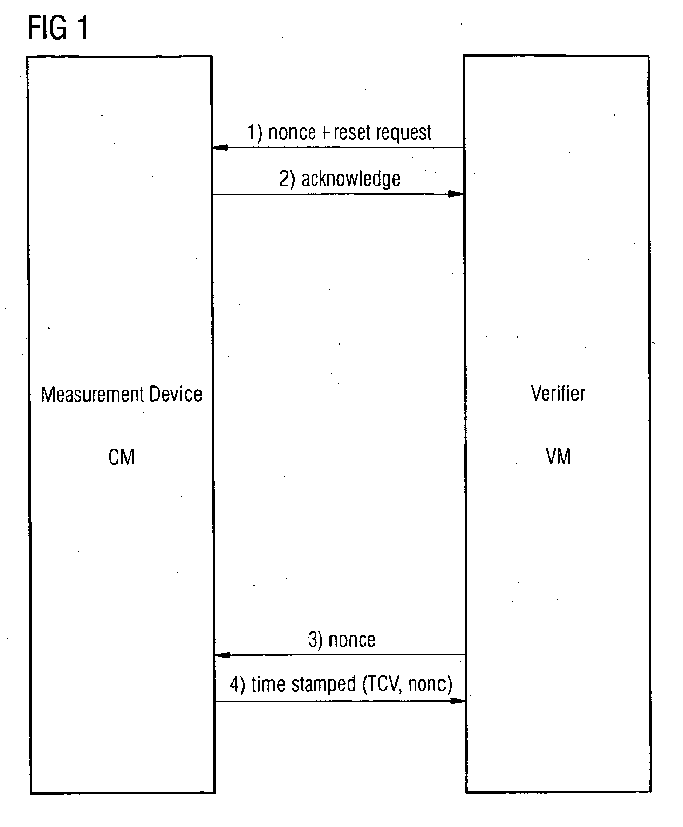

With this notification the TCG mechanism can be outlined as follows:
TCV time and UTC time are related to each other via the associating mechanism of Fig. 1. Accordingly,
   1. Over a secured and authenticated link between the clock module CM and the verification module VM a nonce is provided by the verification module VM and the request to reset the TCV is issued to the clock module CM. Here a nonce (a number that is used only once) is used for security reasons. A nonce is usually a random or pseudo-random number issued in an authentication protocol to ensure that old communications cannot be reused in replay attacks.
   2. This operation has to be acknowledged by the clock module CM. The acknowledgement message has to contain a proof of authenticity and freshness (e.g. a hash value generated using the nonce as part of the input). The verification module VM stores a UTC value corresponding to the reset time and the nonce sent by CM in his database.
   3. After some time is elapsed a request for a TCV value is sent to the clock module CM. Again a nonce is used.
   4. At the time of communication the clock module CM offers a time stamped TCV value. The timestamp enables the verification module VM to check that the actual value of the TCV is up-to-date and to verify that the device clock was not interfered with. A nonce can be used to prove the freshness of the value. The verification module VM can use this TCV value, the corresponding UTC value and the UTC value at the reset time to calculate the relationship between TCV time and UTC time (association of TCV time with UTC time).

After this mechanism has been performed any TCV value generated by the clock module CM can be assigned a corresponding UTC value by the verification module VM. For instance, measurement values can be taken and sent to the verification module VM together with a corresponding TCV value. Subsequently, the verification module VM associates a UTC value for further processing of the measurement data (e.g. charging).

There is a need to extend the use of trusted computer modules or TCV clock devices to more complex scenarios. In particular, if the clock module CM and the verification module VM may are not directly connected this situation raises new security issues and threats.

The aim of this invention is to provide for an extended use of trusted clock modules.

The present invention relies on the observation that a wider range of applications for TCV clock modules is furthered by the employment of a proof, such as a certificate or token, that an association of TCV time with UTC time has been established. There are two major aspects where the introduction of such a proof provides for improvements over the current situation:
- Such a proof can be applied to set up a secure UTC time association (UTC time association is to be understood as association of UTC time with TCV time or assignment of UTC time to TCV time) in environments where the TCV clock module and the entity that performs the UTC association are not neighbors (i.e. communicate over an intermediate node).
- A TCV clock module which can prove its UTC association can be employed as a TA (time authority), i.e. can provide timestamps including TCV values that can be associated with UTC values.

According to the first aspect it is proposed to require a proof (e.g. certificate) that a TCV clock of a node has a UTC time association prior to using the node for the transmission of messages in a UTC time association process. During such a UTC time association process at least one TCV value is transmitted from the clock module generating the TCV time to an entity that associates the TCV value with a UTC value (below such an entity is called verification module).
Therein, the expressions TCV value and UTC value may refer to absolute values at a given moment of time or time intervals. By using intermediate nodes with UTC time association for UTC time association processes transmission delays can be monitored and delays not in compliance with accuracy criteria can be detected. Further methods to improve the security of TCV transmission or UTC time association can be used such as signatures, timestamps, and nonce values. These measures are preferably also employed when the intermediate node provides the proof that a UTC time association exists.

Preferably, the proof, e.g. a certificate, is signed by a verification module that performed a UTC time association for the intermediate node's clock.

According to one embodiment, a proof for at least one further quality criterion (e.g. regarding clock accuracy or time setting accuracy) met by the intermediate node's clock is provided concurrently with the proof of the UTC time association (e.g. via the same certificate proving the UTC time association).

TCV values transmitted via trusted intermediate node (i.e. nodes provided with UTC association) can be used to associate or correlate TCV time with UTC time, e.g. by means of two associated pairs of absolute time values or by means of two associated time interval values. For instance, in an initial step the clock of the clock module is reset by the verification module, and a UTC value corresponding to the time of reset is recorded (synchronisation). This UTC value corresponds to the TCV restart value, i.e. can be associated with the initial value of the TCV time counter.

According to one embodiment, a UTC value is transmitted from the verification module to the intermediate node. This UTC value can be used to synchronise the UTC time with which the intermediate node is associated and the UTC time used by the verification module.

Generally, the UTC time values used by the verification module are either generated by the verification module or obtained from a UTC time authority (TA). In the first case the verification module also operates as TA.

The intermediate node can be enabled to provide a proof of UTC time association as follows:

First TCV time generated by a TCV clock module of the intermediate node is associated with UTC time. This step can be performed by a verification node or a UTC time authority. Then a certificate is provided to the TCV clock module that proves the UTC time association. This certificate is preferably provided with a cryptographic signature so that the verification module or TA that performed the association can be identified. In addition to the UTC time association additional quality criteria such as clock accuracy and time setting accuracy may be certified. The verification module or TA can be provided with corresponding quality parameter for building the certificate.

According to an embodiment, the method for providing a UTC time association certificate work as follows:

A request to provide a current TCV value is transmitted from the verification module to the TCV clock module. Upon reception of the request the current TCV value is transmitted from the TCV clock module to the verification module. Then a UTC value is associated with the TCV value. After the elapse of a time interval the corresponding TCV time interval value is transmitted from the TCV clock module to the verification module, so that UTC time association may be performed. The association certificate provided to the TCV clock module is signed by the verification module and comprises the UTC value and the TCV time interval value. This information is sufficient for time association, i.e. the certificate proves that the verification module was supplied with sufficient information for UTC time association. Signatures may be used to improve the security of this method.

The invention also comprises a TCV clock module that is endowed with a certificate proving that the TCV time generated by the clock module is associated with a UTC time. Preferably, the signature is provided with the signature of a verification module. This certificate may further prove that the TCV clock module meets at least one additional quality criterion, such as a criterion relating to clock accuracy or time setting accuracy.

Such a TCV clock module can be used as a time authority for providing timestamps with TCV values that are certified to be associated with UTC values. Such a module can be employed in a dynamical way in various network configurations, e.g. in a peer-to-peer environment where the individual peers are not supplied with UTC clocks. Among a plurality of nodes with certified TCV clocks criteria such as the time when the certificate was established can be used to identify the "better" time source in an interaction of two nodes with trusted time sources. An assessment can be based on the time of issuance of a certificate. In this case, during the establishment of a certificate a UTC value corresponding to the issuing time is preferably incorporated in the certificate. According to a further application scenario a metering device is provided with a trusted time source and uses TCV values for timestamping measurement data.

Below, embodiments of the invention are presented with reference to figures.

The figures show:
Fig.1: A state of the art UTC time association
Fig.2: a first example for a UTC time association according to the invention
Fig.3: a second example (variant) for a UTC time association according to the invention
Fig.4: provision of an accuracy and UTC time association certificate
Fig.5: employment of time association certificates to provide reliable time measuring in complex network scenarios
Fig. 1 shows a state of the art association of TCV time with UTC time. Such an association relies on the assumption that TCV clock module and verification module VM are directly connected, i.e. neighbours. For this scenario safety standards can be guaranteed, e.g. by following the procedure laid out in TCG (Trusted computing group) specifications. The TCG generally assumes the verification module VM to represent a UTC time authority, i.e. to comprise a UTC clock. This assumption is not necessary to implement the present invention, e.g. according to the below embodiments. The verification module VM may also obtain UTC values from an external TA, such as provided by DigiStamp.

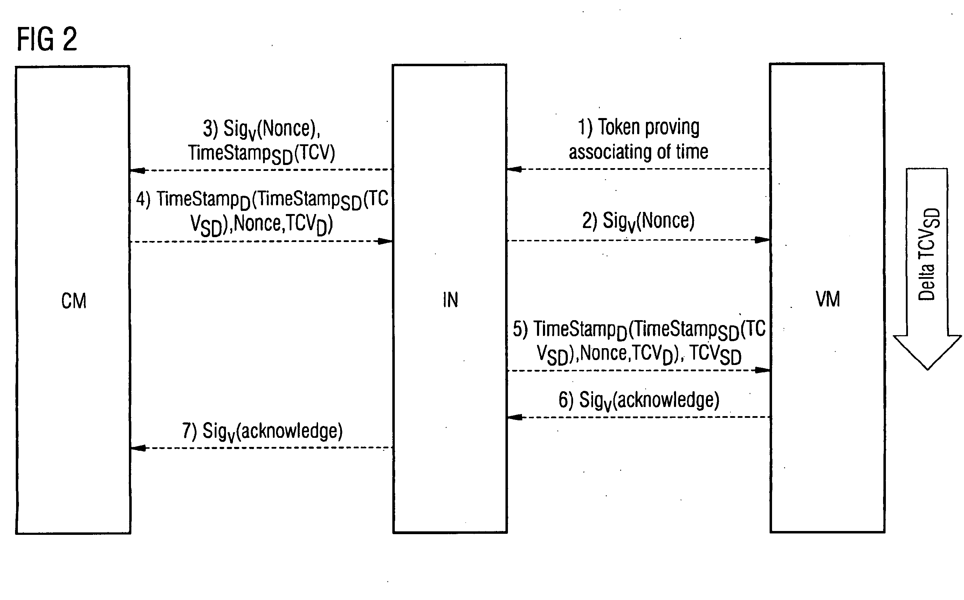

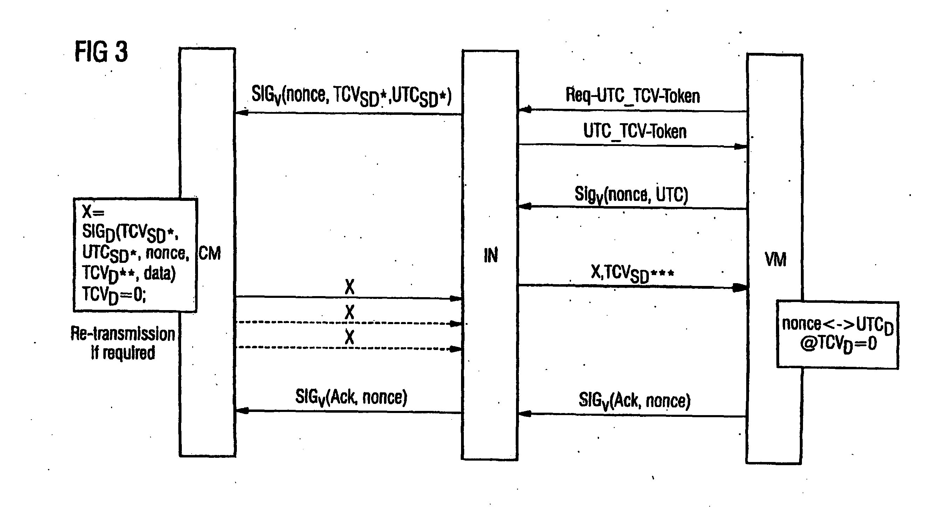

In this invention, we go beyond next-neighbour interaction for UTC time association (Fig. 2 and Fig.3). This extension relies on the certification that intermediate nodes or entities are associated with UTC time. The embodiments of Fig.2 and Fig.3 show a UTC time association via one intermediate node IN. It is straightforward to extend this scenario to a plurality of intermediate nodes for each of which a UTC time association would be proven.

The embodiment according to Fig. 2 or 3 comprises the following steps:
1) Upon a request by the verification module VM the intermediate node IN provides a certificate or token that its local clock is associated with UTC time.
2) A nonce is sent from the verification module VM to the intermediate node IN. This nonce is signed by the verification module VM. The apposition of a timestamp is recommended.
3) The nonce and a timestamp over the intermediate's node TCV time are sent to the clock module CM. Clock module CM creates a data block X including the intermediate node's TCV value and timestamp, which were sent from the intermediate node, the clock module's actual TCV value, and the nonce. The data block X is provided a timestamp and transmitted to the intermediate node IN. After successful creation and storage of X, the clock module or device CM resets its TCV clock and uses the nonce as reference for this operation.
4) Data block X is transmitted to the intermediate device IN.
5) The intermediate device IN transmits the data block X and its actual TCV value to the verification module VM.
6) The verification module is now able to check the TCV time of the clock module CM and to store the corresponding UTC value. An authenticated acknowledgement is sent to the intermediate node IN.
7) The intermediate node IN passes on the acknowledgement to the clock module CM.

The inclusion of its actual TCV value by the intermediate node IN allows for verification (matching with UTC time) that no undue delay has been incurred. It is useful to include a TCV value in both directions (message to clock module CM and from clock module CM). Thus, the source of an abnormal delay can be localised even if different paths are used in both directions. The loss of a message can be detected by using timers for the reception of return messages or acknowledgements. Retransmission can be performed in this case. A retransmission of data block X is indicated in Fig. 3. Fig. 3 further differs from the embodiment of Fig. 2 in that a UTC value is transmitted from the verification module VM to the intermediate node IN so that UTC time can be synchronised. The intermediate module IN sends its actual, possibly synchronised UTC value to the clock module CM for incorporation into the data block X. This UTC value can be used after transmission back to the verification module VM. The transmission of UTC values for synchronisation is useful if the intermediate node comprises a UTC clock or uses a UTC clock different from the verification module VM.

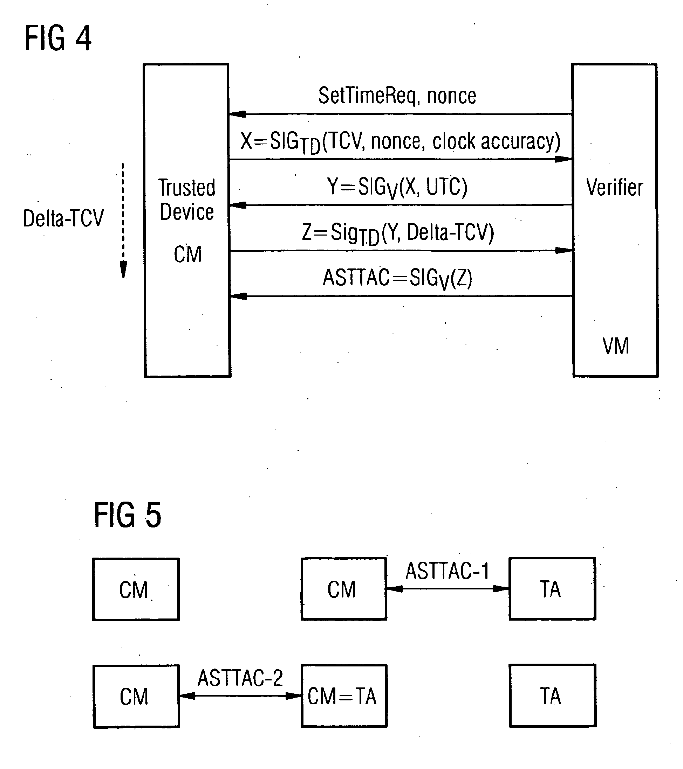

Fig. 4 sets out a protocol for creating a time association certificate, e.g. a UTC time association certificate. Following steps are performed:
- A request for time setting (SetTime Req) and a nonce is sent from the verification module to a clock module, which is to operate as a trusted time source or time authority.
- A data block X comprising the actual TCV value, the nonce and the clock accuracy is generated, signed and sent to the verification module.
- The TCV value is associated with a UTC value. The data block X and the UTC value are concatenated and signed. The resulting data block Y is transmitted to the clock module CM.
- Data block Y and the difference between the actual TCV value and the previously transmitted TCV value (Delta-TCV) are concatenated to form data block Z and sent to the verification module VM. Thereupon, the verification module VM has obtained sufficient TCV time information to perform a UTC time association.
- The signed data block Z is transmitted back to the clock module CM to be used as UTC time association certificate (ASTTAC: accuracy stating tick-to-time association certificate). This certificate may be used to prove additional properties such as clock accuracy and time setting accuracy.

Generally, there may be a benefit (e.g. higher accuracy) in resetting TCV time in the process of UTC time association (Fig. 2 and Fig. 3) or certification of UTC time association (Fig. 4). There are situations where a reset is better avoided. For instance, a clock module with a certified UTC time association may in turn be used for certifying a time association (Fig. 5). In this case a reset may interfere with a certification procedure where no second local time value can be associated after a reset.

In general, the concept put forth in Fig.4 and Fig. 5 can be flexibly employed in various many-node scenarios. Time certifications can be established at need. Individual time certificates can be put into relation with each other to optimise time provision services among the nodes, e.g. a time certificate may be invalidated once a more recent one is encountered. In particular, ad-hoc networks and peer-to-peer networks with external UTC source are amenable to this concept.

## Claims

1. Method for associating a tick clock value, hereinafter referred to as TCV value, generated by a clock module (CM) with a universal time clock, hereinafter referred to as UTC value, wherein
- a verification module (VM) associates a UTC value with the TCV value, **characterized in that**
- the TCV value is transmitted from the clock module (CM) to the verification module (VM) via at least one intermediate node (IN), and
- prior to transmission of the TCV value the intermediate node (IN) provides a proof to the verification module (VM) that it comprises a clock with UTC time association.

2. The method according to claim 1,
**characterized in that**
the UTC time association is proven by providing a certificate.

3. The method according to claim 2,
**characterized in that**
the certificate is signed by a verification module (VM) that performed a UTC time association for the intermediate node's clock.

4. The method according to one of the preceding claims,
**characterized in that**
concurrently with the proof of the UTC time association a proof for at least one further quality criterion met by the intermediate node's clock is provided.

5. The method according to claim 4,
**characterized in that**
the quality criterion relates to clock accuracy or time setting accuracy.

6. The method according to one of the preceding claims,
**characterized in that**
TCV time and UTC time are associated either by means of two associated pairs of absolute time values or by means of two associated time interval values.

7. The method according to claim 6,
**characterized in that**
- the clock of the clock module (CM) is reset by the verification module (VM), and
- a UTC value corresponding to the time of reset is recorded as associated with the TCV time restart.

8. The method according to one of the preceding claims,
**characterized in that**
a UTC value is transmitted from the verification module (VM) to the intermediate node (IN).

9. The method according to one of the preceding claims,
**characterized in that**
UTC time values are generated by the verification module (VM) or obtained from a UTC time authority.

10. The method according to one of the preceding claims,
**characterized in that**
for at least one transmission of a TCV value at least one security measure is used.

11. The method according to claim 10, wherein
the security measure is the transmission of a nonce, the provision of a signature to data, or the provision of a timestamp to data.

## Patentansprüche

1. Verfahren zum Assoziieren eines durch ein Zeitgebermodul (CM) erzeugten Tick-Zeitgeberwerts, der im Folgenden als TCV-Wert bezeichnet wird, mit einem Wert der koordinierten Weltzeit, der im Folgenden als UTC-Wert bezeichnet wird, wobei
- ein Verifikationsmodul (VM) einen UTC-Wert mit dem TCV-Wert assoziiert, **dadurch gekennzeichnet, dass**
- der TCV-Wert von dem Zeitgebermodul (CM) über mindestens einen zwischengeschalteten Knoten (IN) zu dem Verifikationsmodul (VM) gesendet wird und
- vor der Übertragung des TCV-Werts der zwischengeschaltete Knoten (IN) dem Verifikationsmodul (VM) einen Beweis vorlegt, dass er einen Zeitgeber mit UTC-Zeitassoziation umfasst.

2. Verfahren nach Anspruch 1, **dadurch gekennzeichnet, dass** die UTC-Zeitassoziation durch Bereitstellen eines Zertifikats bewiesen wird.

3. Verfahren nach Anspruch 2, **dadurch gekennzeichnet, dass** das Zertifikat durch ein Verifikationsmodul (VM) signiert wird, das eine UTC-Zeitassoziation für den Zeitgeber des zwischengeschalteten Knotens durchgeführt hat.

4. Verfahren nach einem der vorhergehenden Ansprüche,
**dadurch gekennzeichnet, dass**
gleichzeitig mit dem Beweis der UTC-Zeitassoziation ein Beweis für mindestens ein weiteres von dem Zeitgeber des zwischengeschalteten Knotens erfülltes Qualitätskriterium bereitgestellt wird.

5. Verfahren nach Anspruch 4, **dadurch gekennzeichnet, dass** das Qualitätskriterium Zeitgebergenauigkeit oder Zeiteinstellungsgenauigkeit betrifft.

6. Verfahren nach einem der vorhergehenden Ansprüche,
**dadurch gekennzeichnet, dass**
TCV-Zeit und UTC-Zeit entweder mittels zweier assoziierter Paare von Absolutzeitwerten oder mittels zweier assoziierter Zeitintervallwerte assoziiert werden.

7. Verfahren nach Anspruch 6, **dadurch gekennzeichnet, dass**
- der Zeitgeber des Zeitgebermoduls (CM) durch das Verifikationsmodul (VM) zurückgesetzt wird und
- ein dem Zeitpunkt des Rücksetzens entsprechender UTC-Wert als mit dem TCV-Zeitneustart assoziiert aufgezeichnet wird.

8. Verfahren nach einem der vorhergehenden Ansprüche,
**dadurch gekennzeichnet, dass**
ein UTC-Wert von dem Verifikationsmodul (VM) zu dem zwischengeschalteten Knoten (IN) gesendet wird.

9. Verfahren nach einem der vorhergehenden Ansprüche,
**dadurch gekennzeichnet, dass**
UTC-Zeitwerte durch das Verifikationsmodul (VM) erzeugt oder von einer UTC-Zeitautorität erhalten werden.

10. Verfahren nach einem der vorhergehenden Ansprüche,
**dadurch gekennzeichnet, dass**
für mindestens eine Übertragung eines TCV-Werts mindestens eine Sicherheitsmaßnahme verwendet wird.

11. Verfahren nach Anspruch 10, wobei
die Sicherheitsmaßnahme die Übertragung einer Nonce, die Bereitstellung einer Signatur an Daten oder die Bereitstellung eines Zeitstempels an Daten ist.

## Revendications

1. Procédé d'association d'une valeur d'horloge de tick, ci-après appelée valeur TCV, générée par un module d'horloge (CM) avec une horloge en temps universel, ci-après appelée valeur UTC, dans lequel
- un module de vérification (VM) associe une valeur UTC avec la valeur TCV, **caractérisé en ce que**
- la valeur TCV est transmise du module d'horloge (CM) au module de vérification (VM) par l'intermédiaire d'au moins un noeud intermédiaire (IN), et
- avant la transmission de la valeur TCV, le noeud intermédiaire (IN) fournit une preuve au module de vérification (VM) qu'il comprend une horloge avec une association de temps UTC.

2. Procédé selon la revendication 1,
**caractérisé en ce que**
l'association de temps UTC est prouvée en fournissant un certificat.

3. Procédé selon la revendication 2,
**caractérisé en ce que**
le certificat est signé par un module de vérification (VM) qui a effectué une association de temps UTC pour l'horloge du noeud intermédiaire.

4. Procédé selon l'une des revendications précédentes,
**caractérisé en ce que**
concurremment avec la preuve de l'association de temps UTC, une preuve pour au moins un autre critère de qualité satisfait par l'horloge du noeud intermédiaire est fournie.

5. Procédé selon la revendication 4,
**caractérisé en ce que**
le critère de qualité se rapporte à la précision de l'horloge ou à la précision de mise à l'heure.

6. Procédé selon l'une des revendications précédentes,
**caractérisé en ce que**
le temps TCV et le temps UTC sont associés soit au moyen de deux paires associées de valeurs en temps absolu, soit au moyen de deux valeurs associées d'intervalles de temps.

7. Procédé selon la revendication 6,
**caractérisé en ce que**
- l'horloge du module d'horloge (CM) est réinitialisée par le module de vérification (VM), et
- une valeur UTC correspondant au moment de réinitialisation est enregistrée comme associée avec le redémarrage en temps TCV.

8. Procédé selon l'une des revendications précédentes,
**caractérisé en ce que**
une valeur UTC est transmise du module de vérification (VM) au noeud intermédiaire (IN).

9. Procédé selon l'une des revendications précédentes,
**caractérisé en ce que**
des valeurs en temps UTC sont générées par le module de vérification (VM) ou obtenues d'une autorité en temps UTC.

10. Procédé selon l'une des revendications précédentes,
**caractérisé en ce que**
pour au moins une transmission d'une valeur TCV, au moins une mesure de sécurité est utilisée.

11. Procédé selon la revendication 10, dans lequel
la mesure de sécurité est la transmission d'un « nonce », la fourniture d'une signature des données, ou la fourniture d'un horodatage des données.
